# EUROPEAN PATENT SPECIFICATION

(11) **EP 2 308 928 B1**
(45) Date of publication and mention of the grant of the patent: **05.03.2014**
(21) Application number: 09800219.9
(22) Date of filing: 23.07.2009
(51) Int. Cl.: C08L 69/00, C08G 64/02, G02B 1/04

(54) **POLYCARBONATE RESIN COMPOSITION AND OPTICAL MATERIAL USING THE SAME**
POLYCARBONATHARZZUSAMMENSETZUNG UND OPTISCHES MATERIAL DAMIT
COMPOSITION DE RÉSINE POLYCARBONATE ET MATÉRIAU OPTIQUE L'UTILISANT

(30) Priority: 25.07.2008 JP 2008192664
(43) Date of publication of application: 13.04.2011
(73) Proprietor: Mitsubishi Gas Chemical Company, Inc., Tokyo 100-8324 (JP)
(72) Inventor: KATO, Noriyuki, Tokyo 125-0051 (JP); YAMADA, Toshiaki, Tokyo 125-0051 (JP); YOSHIDA, Shu, Tokyo 125-0051 (JP); HAGIWARA, Jun, Tokyo 125-0051 (JP); KANEKO, Kazuaki, Tokyo 125-0051 (JP)
(74) Representative: Zimmermann & Partner
(86) International application number: PCT/JP2009/003456
(87) International publication number: WO 2010/010703

(56) References cited:
- JP-A- 10 324 796
- JP-A- 2002 309 015
- JP-A- 2004 359 900
- JP-A- 2007 057 916
- US-A- 5 486 577
- US-A- 5 486 577
- US-A1- 2004 245 511
- US-A1- 2008 085 955

## Description

### TECHNICAL FIELD

The present invention relates to a polycarbonate resin composition excellent in environment resistance and low-birefringent properties, and to optical materials such as lenses, films and sheets using the same.

### BACKGROUND ART

Polycarbonate resins formed of 2,2-bis(4-hydroxyphenyl) propane (popular name: bisphenol A) have been used in various optical material applications such as substrates of CD or DVD, optical films, optical sheets, a wide variety of lenses, or prisms since they are excellent in transparency, heat resistance, low water-absorption properties, chemical resistance, mechanical characteristics, and dimension stability. However, the resins have large birefringence, and it is difficult to use them in the technical fields requiring low-birefringence.

Therefore, in the technical fields requiring low-birefringence, acrylic resins, noncrystalline polyolefins, or polycarbonate resins having a specific structure have been used. However, acrylic resins suffer from high water-absorption properties, low dimension stability, or low chemical resistance properties; and noncrystalline polyolefins suffer from low impact resistance, low chemical resistance properties or high price. Furthermore, some of molded products formed of acrylic resins or noncrystalline polyolefins don't exhibit sufficient low-birefringence, and therefore, in the technical field requiring lower-birefringence, such resins may not be used.

Examples of the polycarbonate resin having a specific structure include copolymerization-polycarbonate resins derived from 9,9-bis (3-methyl-4-hydroxyphenyl)fluorene and tricyclo[5.2.1.0^{2.6}] decanedimethanol (see Patent Document 1). Although injection-molded products formed of the copolymerization-polycarbonate resins are excellent in low-birefringence, they suffer from easily being colored during the production process.

Polycarbonate resins formed of 9,9-bis(4-(2-hydroxyethoxy)phenyl) fluorene have been also proposed (see Patent Document 2). Although they exhibit low-birefringence, they suffer from insufficient flowability, chemical resistance and environmental stability. Furthermore, it cannot be said that their photoelastic coefficients are low sufficiently, and they are expensive. Polycarbonate resins formed of 9,9-bis(4-(2-hydroxyethoxy)phenyl) fluorene and bisphenol have been also proposed (see Patent Document 3). Although they exhibit low-birefringence, they suffer from insufficient flowability, chemical resistance and environmental stability. Furthermore, it cannot be said that their photoelastic coefficients are low sufficiently.

Copolymerization-polycarbonate resins formed of 9,9-bis(4-(2-hydroxyethoxy)phenyl) fluorene and aliphatic diol have been also proposed (see Patent Document 4). Although they exhibit excellent low-birefringence, excellent flowability and low photoelastic coefficient, their environment resistance properties are not sufficient.

Furthermore, the blended materials of copolymerization-polycarbonate resins, formed of 9,9-bis(4-(2-hydroxyethoxy)phenyl) fluorene and aliphatic diol, and polycarbonate resins, formed of bisphenol A, have been also proposed (see Patnet Document 5). Although the materials are excellent in chemical resistance, oil resistance and low-birefringence, their environment resistance properties are not sufficient. Therefore, low-birefringent polycarbonate resins, which are inexpensive and have excellent environment resistance properties, have been required.

### PRIOR ART DOCUMENTS

### PATENT DOCUMENTS

[Patent Document 1] JP-A-2000-169573
[Patent Document 2] JP-A-10-101787
[Patent Document 3] JP-A-10-101786
[Patent Document 4] JP-A-2004-67990
[Patent Document 4] JP-A-2004-359900

### DISCLOSURE OF THE INVENTION

### PROBLEMS TO BE RESOLVED BY THE INVENTION

An object of the present invention is to provide a transparent polycarbonate resin composition, which is inexpensive and has excellent low-birefringent and environment resistance properties.

### MEANS OF SOLVING THE PROBLEMS

In order to solve the above-mentioned problems, the present inventors conducted various studies, as a result, they found that the above-mentioned problems can be solved by a polycarbonate resin composition comprising a polycarbonate resin (A) prepared by forming carbonate bonds in a dihydroxy compound represented by formula (1) with a diester carbonate, and polycarbonate resin (B) prepared by forming carbonate bonds in 2,2-bis (4-hydroxyphenyl)propane with a diester carbonate or phosgene, and then made the present invention.

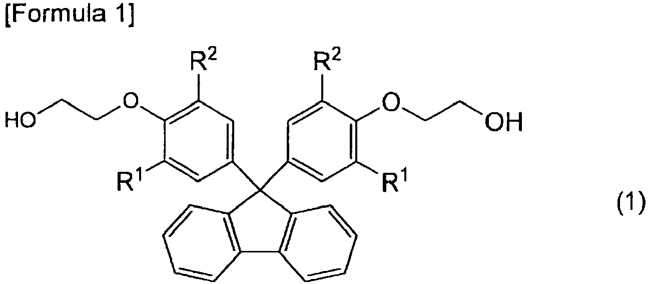

(in the formula, R¹ and R² each independently represent a hydrogen atom or methyl.)

### MODE FOR CARRYING OUT THE INVENTION

The present invention relates to a polycarbonate resin composition containing the prescribed polycarbonate resin (A) and the prescribed polycarbonate resin (B).

The polycarbonate resin (A) is a polycarbonate resin prepared by forming carbonate bonds in a dihydroxy compound represented by formula (1) with a diester carbonate. Specifically, the polycarbonate resin (A) may be prepared by polymerization of a dihydroxy compound represented by formula (1) in a presence of a diester carbonate and catalyst according to any known melt-polycondensation method. The production method will be described in detail later.

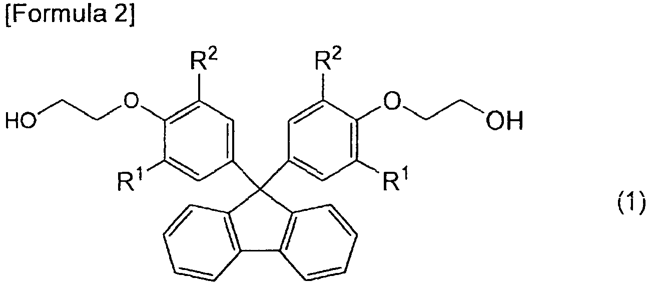

In the formula, R¹ and R² each independently represent a hydrogen atom or methyl.

Examples of the compound represented by formula (1) include 9,9-bis(4-(2-hydroxyethoxy)phenyl)fluorene, 9,9-bis(4-(2-hydroxyethoxy)-3-methylphenyl)fluorene, and 9,9-bis(4-(2-hydroxyethoxy)-3,5-dimethylphenyl)fluorene. Among these, 9,9-bis (4-(2-hydroxyethoxy)phenyl)fluorene, in which both of R¹ and R² are hydrogen atoms, is preferably used. The polycarbonate resin (A) may have a random, block or alternative copolymerization structure.

The polystyrene-converted weight average molecular weight (Mw) of the polycarbonate resin (A) is from 20,000 to 300,000, or preferably from 35,000 to 150,000. The blended resin composition containing the polycarbonate resin (A) whose Mw is smaller than 20,000 may be brittle, which is not preferable. The polycarbonate resin composition containing the polycarbonate resin (A) whose Mw is more than 300,000 has a high melt viscosity, which may require undesirable severer conditions for being blended. Furthermore, such a resin composition may be subjected to an injection molding under severer conditions, which may cause undesirable silver patterns in the molded products.

It is to be noted that the polycarbonate resin (A) contains only the units derived from the hydroxy compound represented by formula (1) and a diester carbonate, and contains essentially no unit derived from any monomer other than them.

The polycarbonate resin (B) to be used in the invention is a polycarbonate resin prepared by forming carbonate bonds in 2,2-bis (4-hydroxyphenyl)propane with a diester carbonate or phosgene. The polycarbonate resin (B) may be prepared by polymerization of 2,2-bis(4-hydroxyphenyl)propane (bisphenol A) according to any known melt-polycondensation or interfacial polymerization method. The production method will be described in detail later. As the polycarbonate resin (B), homopolymers of 2,2-bis (4-hydroxyphenyl)propane are preferably used. However, a small amount of any bisphenol other than bisphenol A without lowering the properties may be copolymerized. The polycarbonate resin (B) may be selected from commercially-available products, and examples of the product include "lupilon H-4000"(Trade name: manufactured by Mitsubishi Engineering-Plastics Corporation, MW:33000), "lupilon S-3000"(Trade name: manufactured by Mitsubishi Engineering-Plastics Corporation, MW:45000) and "lupilon E-2000" (Trade name: manufactured by Mitsubishi Engineering-Plastics Corporation, MW:60000).

The polystyrene-converted weight average molecular weight (Mw) of the polycarbonate resin (B) is from 15,000 to 250,000, or preferably from 20,000 to 110,000. The blended resin composition containing the polycarbonate resin (B) whose Mw is smaller than 15,000 may be brittle, which is not preferable. The polycarbonate resin composition containing the polycarbonate resin (B) whose Mw is more than 250,000 has a high melt viscosity, which may require severer conditions for being blended. Furthermore, such a resin composition may be subjected to an injection molding under severer conditions, which may cause undesirable silver patterns in the molded products.

The polycarbonate resins (A) and (B) are blended each other preferably in a ratio by weight, (100x(A))/((A)+(B)), of from 1 to 99 %, more preferably in the ratio by weight of from 10 to 90 %, or much more preferably in the ratio by weight of from 20 to 90 %. The resin composition, prepared by blending them by the ratio of less than 1 wt%, may not show sufficient low-birefringent properties, which is not preferable. The resin composition, prepared by blending them by the ratio of more than 99 wt%, may not show sufficient chemical-resistance and environment-resistance, which is not preferable. In terms of low-birefringent properties, the ratio of the polycarbonate resin (A) is preferably higher than the ratio of the polycarbonate (B); or, in other words, in terms of low-birefringent properties, the value of (100×(A))/((A)+(B)) is preferably equal to or higher than 50%, more preferably higher than 50%. Further considering chemical and environment resistance properties, the value is preferably from 50 to 80%, or more preferably from 50 to 70%.

The polycarbonate resin composition of the invention may contain plural types of the polycarbonate resins (A) and (B) respectively. In such a case, the values of (A) and (B) in the formula of (100×(A))/((A)+(B)) mean the total weights of the plural types of the polycarbonate resins (A) and (B) respectively.

The difference (ΔMw) of polystyrene-converted weight average molecular weight (Mw) between the polycarbonate resins (A) and (B) is preferably from 0 to 120,000, or more preferably from 0 to 80,000. The polycarbonate resins (A) and (B), whose ΔMw is more than 12,000, may show a remarkably big difference in viscosity therebetween, and may be compatible hardly. Therefore, the resin composition, containing such the polycarbonate resins, may show lowered transparency, which is not preferable.

The glass-transition temperature (Tg) of the polycarbonate resin composition of the invention is preferably from 95 to 180 degrees Celsius, or more preferably from 105 to 170 degrees Celsius. The composition, having Tg of lower than 95 degrees Celsius, may be used in only a narrow temperature range, which is not preferable. The composition, having Tg of higher than 180 degrees Celsius, may have to be subjected to a molded process under severer conditions, which is not preferable.

Next, examples of the method for preparing the polycarbonate resin (A) will be described in detail.

The polycarbonate resin (A) may be prepared by polymerization of a dihydroxy compound represented by formula (1) in a presence of a diester carbonate and catalyst according to any known melt-polycondensation method.

Basic-compound catalysts, transesterification catalysts and any mixed catalysts formed both of them may be used as the catalyst.

As the diester carbonate, diphenyl carbonate, ditolyl carbonate, bis(chlorophenyl)carbonate, m-crezyl carbonate, dimethyl carbonate, diethyl carbonate, dibutyl carbonate, dicyclohexyl carbonate and the like are exemplified. Among these, diphenyl carbonate is preferable. Diphenyl carbonate is preferably used by a ratio of from 0.90 to 1.15 moles, or more preferably by a ratio of from 0.95∼1.05 moles, with respect to 1 mole of the dihydroxy compound represented by formula (1).

As the basic-compound catalyst, alkali metal and/or alkali earth metal compounds, nitrogen-containing compounds and the like are especially exemplified. Specific examples thereof include organic acid salts, inorganic acid salts, oxides, hydroxides, hydrides, and alkoxides of alkali metal and alkali earth metal compounds; and quaternary ammonium hydroxides and the salts thereof, and amines. They may be used alone respectively or in combination thereof.

As the alkali metal compound, sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium boron hydride, sodium boron phenylated, sodium benzoate, potassium benzoate, cesium benzoate, lithium benzoate, disodium hydrogen phosphate, dipotassium hydrogen phosphate, dilithium hydrogen phosphate, disodium phenylphosphate, disodium-, dipotassium-, dicesium- and dilithium-salts of bisphenol A, sodium-, potassium-, cesium- and lithium-salts of phenol, or the like are used.

As the alkali earth metal compound, specifically, magnesium hydroxide, calcium hydroxide, strontium hydroxide, barium hydroxide, magnesium hydrogen carbonate, calcium hydrogen carbonate, strontium hydrogen carbonate, barium hydrogen carbonate, magnesium carbonate, calcium carbonate, strontium carbonate, barium carbonate, magnesium acetate, calcium acetate, strontium acetate, barium acetate, magnesium stearate, calcium stearate, calcium benzoate, magnesium phenylphosphate or the like are used.

As the nitrogen-containing compound, specifically, quaternary ammonium hydroxides having an alkyl or aryl group such as tetramethyl ammonium hydroxide, tetraethyl ammonium hydroxide, tetrapropyl ammonium hydroxide, tetrabutyl ammonium hydroxide and trimethylbenzyl ammonium hydroxide, tertiary amines such as triethylamine, dimethylbenzylamine and triphenylamine, secondary amines such as diethylamine and dibutylamine, primary amines such as propylamino and butyl amine, imidazoles such as 2-methylimidazole and 2-phenylimidazole and benzimidazole, bases and basic salts such as ammonia, tetramethyl ammonium borohydride, tetrabutyl ammonium borohydride, tetrabutyl ammonium tetraphenylborate, tetraphenyl ammonium tetraphenylborate, or the like are used.

As the transesterification catalyst, salts of zinc, tin, zirconium or lead are preferably used, and may be used alone respectively or in combination thereof. Specifically, zinc acetate, zinc benzoate, zinc 2-ethylhexanoate, thin (II) chloride, tin (IV) chloride, tin (II) acetate, tin (IV) acetate, dibutyltin dilaurate, dibutyltin oxide, dibutyltin dimethoxide, zirconium acetylacetonate, zirconium oxyacetate, zirconium tetrabutoxide, lead (II) acetate, lead (IV) acetate or the like is used.

These catalysts may be respectively used preferably by a ratio of from 10⁻⁹ to 10⁻³ mole, or more preferably by a ratio of from 10⁻⁷ to 10⁻⁴ mole, with respect to 1 mole of the dihydroxy compound.

In a melt-polycondensation method, the above-described raw materials and catalyst are used, and the melt-polycondensation is carried out by interesterification reaction thereof under heat and under an ordinary or reduced pressure while the by-products are removed. The reaction is usually carried out in two or more multiple-stage step.

Specifically, the reaction in the first stage is carried out at a temperature of from 120 to 220 degrees Celsius, or preferably at a temperature of from 160 to 220 degrees Celsius, for from 0.1 to 5 hours, or preferably for from 0.5 to 3 hours, under a pressure of from an ordinary pressure to 200 Torr. Next, the reaction is continuously carried out while, for from 1 to 3 hours, the temperature is gradually raised to a final temperature of from 230 to 260 degrees Celsius and the pressure is gradually reduced to a final pressure of equal to or less than 1 Torr. Finally, the polycondensation is carried out at a temperature of from 230 to 260 degrees Celsius under a reduced pressure of equal to or less than 1 Torr; and the pressure is recovered with nitrogen gas at the time the viscosity reaches the prescribed value, and then, the reaction is terminated. The reaction time under a pressure of equal to or less than 1 Torr is from 0.1 to 2 hours; and the total reaction time is from 1 to 6 hours, or usually from 2 to 5 hours.

Such a reaction may be carried out in a continuous or batch manner. The reaction device to be used may be any vertical type equipped with an anchor agitating blade, maxblend agitating blade, helical ribbon agitating blade or the like, any horizontal type equipped with a paddle agitating blade, grid agitating blade, glass agitating blade or the like, or any extruder type equipped with a screw. And they may be used in combination considering the viscosity of the polymerized product

After the termination of the polymerization, the catalyst is removed or deactivated for attaining the thermal stability and hydrolytic stability. Generally, the deactivation by adding any known acidic substance is preferably performed. As the substance, specifically, aromatic sulfonic acids such as p-toluenesulfonic acid, aromatic sulfonate esters such as butyl p-toluenesulfonate and hexyl p-toluenesulfonate, aromatic sulfonate salts such as tetrabutylphosphonium dodecylbenzenesulfonate, organohalides such as stearic acid chloride, benzoyl chloride, p-toluenesulfonic acid chloride, alkyl sulfuric acids such as dimethyl sulfuric acid, organohalides such as benzyl chloride, or the like are preferably used.

After the deactivation of the catalyst, the step for removing low-boiling point compounds contained in the polymer by evaporating under a pressure of from 0.1 to 1 Torr at a temperature of from 200 to 350 degrees Celsius may be carried out. For performing the step, any horizontal type device equipped with a blade stir excellent in surface-renewal ability such as a paddle agitating blade, grid agitating blade, glass agitating blade, or any thin-film evaporator is preferably used.

Next, the method for preparing the polycarbonate resin (B) will be described in detail.

One example of the method for preparing the polycarbonate resin (B) is a method in which a dihydroxy compound and a diester carbonate are subjected to a melt-polycondensation in a presence of a basic compound catalyst. This method is carried out almost based on the method of producing the polycarbonate resin (A). However, in the production method of the polycarbonate resin (B), using no transision metal-type interesterification catalyst is preferable.

Another example of the method for preparing the polycarbonate resin (B) is a method in which a dihydroxy compound is subjected to an interfacial polymerization with phosgene in a presence of solvent, an end-stopping agent and an acid-binding agent. In the method, generally, the dihydroxy compound and the end-stopping agent are dissolved in an aqueous solution of the acid-binding agent, and the reaction is carried out in a presence of organic solvent.

As the acid-binding agent, for example, pyridine, or hydroxides of alkali metal such as sodium hydroxide and potassium hydroxide are preferably used. And as the solvent, for example, methylene chloride, chloroform, chlorobenzene, xylene or the like is preferably used. Furthermore, for promoting the polymerization, as a catalyst, tertiary amines such as triethyl amine, or quaternary ammonium salts such as tetra n-butyl ammonium bromide are used.

As the end-stopping agent which is used for adjusting the polymerization degree, mono-functional hydroxy compounds such as phenol, p-tert-butylphenol, p-cumylpehnol and phenols having a long alkyl group are used. Furthermore, if desired, a small amount of an antioxidant such as sodium sulfite and sodium hydrosulfite may be added.

The reaction is usually carried out at a temperature of from 0 to 150 degrees Celsius, or preferably at a temperature of from 5 to 40 degrees Celsius. The reaction time depends on the reaction temperature, and, the reaction time is usually from 0.5 min. to 10 hours, or preferably from 1 min. to 2 hours. And it is preferable that the pH value of the reaction system is kept equal to or more than 10 during the reaction

The method for producing the polycarbonate resin composition of the invention is not limited, and it may be produced according to any one of
[1] a method in which solids of polycarbonate resins (A) and (B) are blended and then kneaded in a kneading machine;
[2] a method in which a solid of the polycarbonate resin (B) is added to a solid of the polycarbonate resin (A) and then kneaded;
[3] a method in which a solid of the polycarbonate resin (A) is added to a solid of the polycarbonate resin (B) and then kneaded; and
[4] a method in which polycarbonate resins (A) and (B) are blended in a molten state and then kneaded.

Kneading may be performed in a continuous process or in a batch wise. When kneading is performed in a continuous process, an extruder is suitably applied. When kneading is performed in a batch wise, a labopastomill or a kneader is suitably applied. When any polycarbonate resin produced by a melt-polycondensation process is used, it is preferable to perform kneading after deactivation of a catalyst in terms of avoiding transesterfication during kneading.

As another process for producing the polycarbonate resin composition of the invention, there is also a process comprising dissolving the polycarbonate resins (A) and (B) in a solvent and pouring it into a mold and then vaporizing the solvent. As the solvent, methylene chloride, chloroform, cresol or the like are used. According to this method, it is possible to add and dissolve any additive at the same time.

Furthermore, if necessary, an antioxidant, a releasing agent, an ultraviolet absorber, a flowability improving agent, a reinforcing agent, crystalline nucleus agent, dye, an antistatic agent, and an antibacterial agent may be added to the resin composition. These additives may be added to each of the resins (A) and (B) or either one thereof prior to blending and kneading or may be added and kneaded at the same time during blending and kneading or may be kneaded after blending.

However, it is preferable that the polycarbonate resin composition of the invention contains no polycarbonate resin other than the polycarbonate resin (A) and (B).

The polycarbonate resin composition of the invention exhibits low-birefringent properties, and therefore, is suitable to be used as a raw material of optical materials such as lenses, optical films and optical sheets. Optical materials such as lenses are required to exhibit not only low-birefringent properties but also high transparency. Actually, the materials whose light transmission rates vary (decrease) by 5% or more cannot be actual use. Especially, the polycarbonate resin composition of the invention is excellent in environment resistance, and can achieve variation in its light transmission within 5% even if it is left under an environment of a high temperature (for example, 85 degrees Celsius) and a high humidity (for example 85 RH%).

### [EXAMPLES]

The present invention will be illustrated in further detail with reference to several examples below, which are not intended to limit the scope of the present invention. The data of the following examples were measured according to the following methods and the following instruments.
1) Glass Transition Temperature (Tg): The measurement was performed by a Differential Scanning Calorimeter (DSC).
2) Refractive Index: The measurement was performed for a sample, having a square parallelpiped shape of 3 mm thick×8mm×8mm, which was prepared by subjecting a polycarbonate resin to a press-molding, by using an refractometer (manufactured by ATAGO).
3) Constant Temperature and Humidity Test: The test was performed by comparing the light transmission rate (measured by "MODEL1001 DP" of NIPPON DENSHIKU INDUSTRIES CO., LTD.) of a sample, which was subjected to a treatment of 85 degrees Celsius and 85% for 300 hours by using a constant temperature and humidity device "ISUZU A204R", with the light transmission rate of the sample before being subjected to the treatment.
4) Birefringence: A press-molded disk sample was disposed between two polarizing plates, and then the total light transmission rate was measured. The smaller rate, or in other words, smaller light leakage, indicates that the sample is lower birefringence and more preferable.

### Reference Example 1 (Production of Polycarbonate Resin (A))

In a 50L-reactor vessel equipped with an agitating instrument and a distillation apparatus, 13.22kg (30.10 moles) of 9,9-bis(4-(2-hydroxyethoxy)phenyl)fluorene, 6.14kg (28.7 moles) of diphenyl carbonate and 0.0152g (1.81×10⁻⁴ mole) of sodium hydrogen carbonate were placed, and heated to 215 degrees Celsius at 760 Torr under a nitrogen gas-atmosphere for an hour under stirring. After that, the pressure was reduced to 150 Torr for 15 minutes, and then, the interesterification reaction was carried out at 215 degrees Celsius at 150 Torr for 20 minutes. Furthermore, the temperature was raised to 240 degrees Celsius at 37.5°C/hr, and then maintained at 240 degrees Celsius for at 150 Torr 10 minutes. After that the pressure was reduced to 120 Torr for 10 minutes, and then maintained at 240 degrees Celsius at 120 Torr for 70 minutes. After that, the pressure was reduced to 100 Torr for 10 minutes, and then maintained at 240 degrees Celsius at 100 Torr for 10 minutes. The pressure was reduced to 1 Torr or less for 40 minutes, and then the polymerization was carried out at 240 degrees Celsius at a pressure of equal to or less than 1 Torr for 10 minutes under stirring. After termination of the reaction, nitrogen gas was blown into the vessel for pressurizing, and then the produced polycarbonate resin was taken out while being subjected to pelletization. Polycarbonate resin (A) having MW of 24500 and Tg of 154 degrees Celsius was obtained.

### Reference Example 2 (Production of Polycarbonate Resin (C))

In a 50L-reactor vessel equipped with an agitating instrument and a distillation apparatus, 10.11kg (23.05 moles) of 9,9-bis(4-(2-hydroxyethoxy)phenyl)fluorene, 4.524kg (23.05 moles) of tricyclo[5.2.1.0^{2,6}]decanedimethanol, 10.22kg (47.71 moles) of diphenyl carbonate and 0.01321 g (1.572×10⁻⁴ mole) of sodium hydrogen carbonate were placed, and heated to 215 degrees Celsius at 760 Torr under a nitrogen gas-atmosphere for an hour under stirring.

After that, the pressure was reduced to 150 Torr for 15 minutes, and then, the interesterification reaction was carried out at 215 degrees Celsius at 150 Torr for 20 minutes. Furthermore, the temperature was raised to 240 degrees Celsius at 37.5°C/hr, and then maintained at 240 degrees Celsius for at 150 Torr 10 minutes. After that, the pressure was reduced to 120 Torr for 10 minutes, and then maintained at 240 degrees Celsius at 120 Torr for 70 minutes. After that, the pressure was reduced to 100 Torr for 10 minutes, and then maintained at 240 degrees Celsius at 100 Torr for 10 minutes. The pressure was reduced to 1 Torr or less for 40 minutes, and then the polymerization was carried out at 240 degrees Celsius at a pressure of equal to or less than 1 Torr for 25 minutes under stirring. After termination of the reaction, nitrogen gas was blown into the vessel for pressurizing, and then the produced polycarbonate resin was taken out while being subjected to pelletization. Polycarbonate resin (C) having MW of 87,000 and Tg of 121 degrees Celsius was obtained.

### Example 1

7Kg of pellets produced in Reference Example 1, and 3kg of pellets of polycarbonate resin (B) formed of bisphenol A, "lupilon H-4000" (manufactured by Mitsubishi Engineering-Plastics Corporation; MW:33000), were sufficiently mixed while being shaken, and were kneaded at 260 degrees Celsius in an extruder; and 7.8 kg of pelletized and blended pellets were obtained. The pellets had Tg of 150 degrees Celsius, and any inflection point was not found. The pellets were subjected to a press-molding to form a disk sample having a diameter of 50 mm and a thickness of 3mm. The disk sample was transparent. The results of evaluation were shown in Table 1.

### Example 2

5Kg of pellets produced in Reference Example 1, and 5kg of pellets of polycarbonate resin (B) formed of bisphenol A, "lupilon H-4000" (manufactured by Mitsubishi Engineering-Plastics Corporation; MW:33000), were sufficiently mixed while being shaken, and were kneaded at 260 degrees Celsius in an extruder; and 7.8 kg of pelletized and blended pellets were obtained. The pellets had Tg of 149 degrees Celsius, and any inflection point was not found. The pellets were subjected to a press-molding to form a disk sample having a diameter of 50 mm and a thickness of 3mm. The disk sample was transparent. The results of evaluation were shown in Table 1.

### Example 3

3Kg of pellets produced in Reference Example 1, and 7kg of pellets of polycarbonate resin (B) formed of bisphenol A, "lupilon H-4000" (manufactured by Mitsubishi Engineering-Plastics Corporation; MW:33000), were sufficiently mixed while being shaken, and were kneaded at 260 degrees Celsius in an extruder; and 7.8 kg of pelletized and blended pellets were obtained. The pellets had Tg of 148 degrees Celsius, and any inflection point was not found. The pellets were subjected to a press-molding to form a disk sample having a diameter of 50 mm and a thickness of 3mm. The disk sample was transparent. The results of evaluation were shown in Table 1.

### Example 4

7Kg of pellets produced in Reference Example 1, 1.5 kg of pellets of polycarbonate resin (B) formed of bisphenol A, "lupilon H-4000" (manufactured by Mitsubishi Engineering-Plastics Corporation; MW:33000), and pellets of polycarbonate resin (B) formed of bisphenol A, "lupilon S-3000" (manufactured by Mitsubishi Engineering-Plastics Corporation; MW:45000), were sufficiently mixed while being shaken, and were kneaded at 260 degrees Celsius in an extruder; and 7.8 kg of pelletized and blended pellets were obtained. The pellets had Tg of 151 degrees Celsius, and any inflection point was not found. The pellets were subjected to a press-molding to form a disk sample having a diameter of 50 mm and a thickness of 3mm. The disk sample was transparent. The results of evaluation were shown in Table 1.

### Example 5

8Kg of pellets produced in Reference Example 1, and 2kg of pellets of polycarbonate resin (B) formed of bisphenol A, "lupilon H-4000" (manufactured by Mitsubishi Engineering-Plastics Corporation), were sufficiently mixed while being shaken, and were kneaded at 260 degrees Celsius in an extruder; and 7.8 kg of pelletized and blended pellets were obtained. The pellets had Tg of 152 degrees Celsius. The pellets were subjected to a press-molding to form a disk sample having a diameter of 50 mm and a thickness of 3mm. The disk sample was transparent. The results of evaluation were shown in Table 1. Although, in terms of low-birefringence, the sample was as excellent as other samples, the sample showed the large lowering in the light-transmission rate, 6%, measured in the constant temperature and humidity test.

### Example 6

2Kg of pellets produced in Reference Example 1, and 8kg of pellets of polycarbonate resin (B) formed of bisphenol A, "lupilon H-4000" (manufactured by Mitsubishi Engineering-Plastics Corporation), were sufficiently mixed while being shaken, and were kneaded at 260 degrees Celsius in an extruder; and 7.8 kg of pelletized and blended pellets were obtained. The pellets had Tg of 146 degrees Celsius. The pellets were subjected to a press-molding to form a disk sample having a diameter of 50 mm and a thickness of 3mm. The disk sample was transparent. The results of evaluation were shown in Table 1. Although, in terms of the light transmission of the constant temperature and humidity test, the sample was as excellent as other samples, the sample showed the large light leakage, 5.0%, measured in the birefringence evaluation.

### Comparative Example 1

Pellets of polycarbonate resin formed of bisphenol A, "lupilon H-4000" (manufactured by Mitsubishi Engineering-Plastics Corporation; MW:33000) were subjected to a press molding to form a disk sample having a diameter of 50 mm and a thickness of 3mm. The disk sample was transparent. The results of evaluation were shown in Table 1.

### Comparative Example 2

Pellets produced in Reference Example 1 were subjected to a press-molding to form a disk sample having a diameter of 50 mm and a thickness of 3mm. The disk sample was transparent. The results of evaluation were shown in Table 1.

### Comparative Example 2

7Kg of pellets produced in Reference Example 2, and 3kg of pellets of polycarbonate resin (B) formed of bisphenol A, "lupilon H-4000" (manufactured by Mitsubishi Engineering-Plastics Corporation), were sufficiently mixed while being shaken, and were kneaded at 260 degrees Celsius in an extruder; and 7.8 kg of pelletized and blended pellets were obtained. The pellets had Tg of 127 degrees Celsius. The pellets were subjected to a press-molding to form a disk sample having a diameter of 50 mm and a thickness of 3mm. The disk sample was transparent. The results of evaluation were shown in Table 1.

**[Table 1]**

| Resin Composition | | Example 1 | Example 2 | Example 3 | Example 4 | Example 5 | Example 6 |
|---|---|---|---|---|---|---|---|
| Resin (A) | | Reference Example 1 | Reference Example 1 | Reference Example 1 | Reference Example 1 | Reference Example 1 | Reference Example 1 |
| Parts by weight | | 70 | 50 | 30 | 70 | 80 | 20 |
| Resin (B) | | H4000 | H4000 | H4000 | H4000 + S3000 | H4000 | H4000 |
| Parts by weight | | 30 | 50 | 70 | 15+15 | 20 | 80 |
| Resin (C) | | - | - | - | - | - | - |
| Parts by weight | | 0 | 0 | 0 | 0 | 0 | 0 |
| Tg(°C) | | 150 | 149 | 148 | 151 | 152 | 146 |
| Refractive Index nD | | 1.6228 | 1.6110 | 1.5995 | 1.6229 | 1.6282 | 1.5950 |
| Constant Temperature and Humidity Test | Light Transmission Rate % before Treatment | 87 | 88 | 87 | 87 | 87 | 87 |
| | Light Transmission Rate % after Treatment | 86 | 86 | 85 | 81 | 85 | 86 |
| | variation % | 1 | 2 | 2 | 6 | 2 | 1 |
| Birefringence | | 0.4% | 1.0% | 3.0% | 0.5% | 0.5% | 5.0% |

**[Table 2]**

| Resin Composition | | Comparative Example 1 | Comparative Example 2 | Comparative Example 3 |
|---|---|---|---|---|
| Resin (A) | | - | Reference Example 1 | - |
| Parts by weight | | 0 | 100 | 0 |
| Resin (B) | | H4000 | - | H4000 |
| Parts by weight | | 100 | 0 | 30 |
| Resin (C) | | - | - | Reference Example 2 |
| Parts by weight | | 0 | 0 | 70 |
| Tg(°C) | | 146 | 154 | 127 |
| Refractive Index nD | | 1.5850 | 1.6399 | 1.5979 |
| Constant Temperature and Humidity Test | Light Transmission Rate % before Treatment | 88 | 87 | 87 |
| | Light Transmission Rate % after Treatment | 86 | 75 | 86 |
| | variation % | 2 | 12 | 1 |
| Birefringence | | 8.4% | 0.3% | 0.8% |

From the data, the resin compositions of the examples according to the present invention were low-birefringence, showed small variation in the light transmission rate between before and after being subjected to the constant temperature and humidity test, and were excellent in environmental resistance. It is to be noted that the polycarbonate resin (A) contained only the units derived from the dihydroxy compound represented by formula (1) and diester carbonate, and didn't substantially contain any unit derived from the monomer other than them.

## Claims

1. A polycarbonate resin composition comprising a polycarbonate resin (A) prepared by forming carbonate bonds in a dihydroxy compound represented by formula (1) with a diester carbonate, and a polycarbonate resin (B) prepared by forming carbonate bonds in 2,2-bis (4-hydroxyphenyl)propane with a diester carbonate or phosgene,
wherein the polycarbonate resin (A) contains only the units derived from the hydroxy compound represented by formula (1) and a diester carbonate. 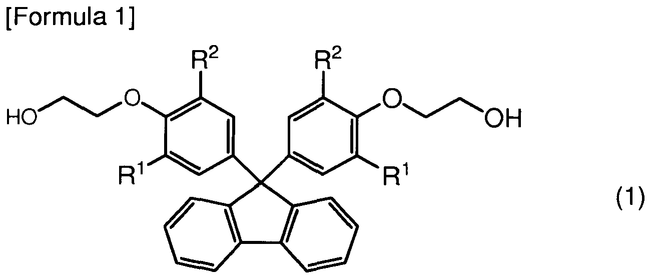 (in the formula, R¹ and R² each independently represent a hydrogen atom or methyl.)

2. The polycarbonate resin composition according to claim 1, wherein R¹ and R² are hydrogen atoms.

3. The polycarbonate resin composition according to claim 1 or 2, wherein a ratio by weight of the polycarbonate resin (A) and the polycarbonate (B), (100x(A))/((A)+(B)), is from 10 to 90%.

4. The polycarbonate resin composition according to claim 1 or 2, wherein a ratio by weight of the polycarbonate resin (A) and the polycarbonate (B), (100x(A))/((A)+(B)), is from 20 to 80%.

5. The polycarbonate resin composition according to claim 1 or 2, wherein a ratio by weight of the polycarbonate resin (A) and the polycarbonate (B), (100x(A))/((A)+(B)), is from 50 to 80%.

6. The polycarbonate resin composition according to any one of claims 1-5, wherein the diester carbonate is diphenyl carbonate, ditolyl carbonate, bis(chlorophenyl)carbonate, m-crezyl carbonate, dimethyl carbonate, diethyl carbonate, dibutyl carbonate or dicyclohexyl carbonate.

7. The polycarbonate resin composition according to any one of claims 1-5, wherein the diester carbonate is diphenyl carbonate.

8. The polycarbonate resin composition according to any one of claims 1-7, wherein a polystyrene-converted weight average molecular weight (Mw) of the polycarbonate resin (A) is from 20,000 to 300,000, and a polystyrene-converted weight average molecular weight (Mw) of the polycarbonate resin (B) is from 15,000 to 250,000.

9. The polycarbonate resin composition according to any one of claims 1-8, wherein a difference, ΔAw, of the polystyrene-converted weight average molecular weight (Mw) between the polycarbonate resin (A) and the polycarbonate resin (B) is from 0 to 120,000.

10. The polycarbonate resin composition according to any one of claims 1-8, wherein a difference, ΔMw, of the polystyrene-converted weight average molecular weight (Mw) between the polycarbonate resin (A) and the polycarbonate resin (B) is from 0 to 80,000.

11. An optical material formed of a polycarbonate resin composition according to any one of claims 1-10.

12. A lens formed of a polycarbonate resin composition according to any one of claims 1-10.

## Patentansprüche

1. Polycarbonatharz-Zusammensetzung umfassend ein Polycarbonatharz (A), hergestellt durch Bilden von Carbonatbindungen in einer Dihydroxyverbindung, die durch Formel (1) wiedergegeben ist, mit einem Diestercarbonat , und ein Polycarbonatharz (B), hergestellt durch Bilden von Carbonatbindungen in 2,2-bis (4-Hydroxyphenyl)Propan mit einem Diestercarbonat oder Phosgen,
wobei das Polycarbonatharz (A) nur die Einheiten, die von der durch die Formel (1) wiedergegebenen Hydroxyverbindung erhalten werden, und ein Diestercarbonat enthält. 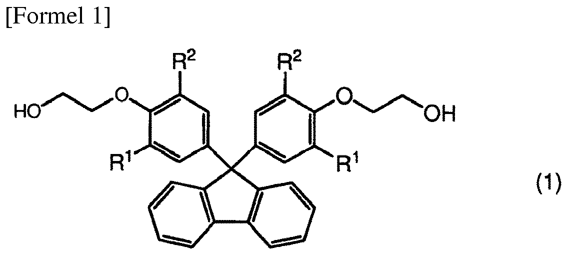 (in der Formel repräsentieren R¹ und R² jeweils unabhängig ein Wasserstoffatom oder Methyl)

2. Polycarbonatharz-Zusammensetzung nach Anspruch 1, wobei R¹ und R² Wasserstoffatome sind.

3. Polycarbonatharz-Zusammensetzung nach Anspruch 1 oder 2, wobei ein Gewichtsverhältnis des Polycarbonatharzes (A) und des Polycarbonatharzes (B), (100x(A))/((A)+(B)), von 10 bis 90% ist.

4. Polycarbonatharz-Zusammensetzung nach Anspruch 1 oder 2, wobei ein Gewichtsverhältnis des Polycarbonatharzes (A) und des Polycarbonatharzes (B), (100x(A))/((A)+(B)) von 20 bis 80% ist.

5. Polycarbonatharz-Zusammensetzung nach Anspruch 1 oder 2, wobei ein Gewichtsverhältnis des Polycarbonatharzes (A) und des Polycarbonatharzes (B), (100x(A))/((A)+(B)) von 50 bis 80% ist.

6. Polycarbonatharz-Zusammensetzung nach einem der Ansprüche 1 bis 5, wobei das Diestercarbonat ein Diphenylcarbonat, Ditolylcarbonat, bis(Chlorophenyl)Carbonat, m-Kresylcarbonat, Dimethylcarbonat, Diethylcarbonat, Dibutylcarbonat oder Dicyclohexyl-Carbonat ist.

7. Polycarbonatharz-Zusammensetzung nach einem der Ansprüche 1 bis 5, wobei das Diestercarbonat ein Diphenylcarbonat ist.

8. Polycarbonatharz-Zusammensetzung nach einem der Ansprüche 1 bis 7, wobei ein Polystyrol-überführtes gewichtsmittleres Molekulargewicht (Mw) des Polycarbonatharzes (A) von 20 000 bis 300 000 ist, und ein Polystyrol-überführtes, gewichtsmittleres Molekulargewicht (Mw) des Polycarbonatharzes (B) von 15 000 bis 250 000 ist.

9. Polycarbonatharz-Zusammensetzung nach einem der Ansprüche 1 bis 8, wobei eine Differenz ΔMw des Polystyrol-überführten gewichtsmittleren Molekulargewichts (Mw) zwischen dem Polycarbonatharz (A) und dem Polycarbonatharz (B) von 0 bis 120 000 ist.

10. Polycarbonatharz-Zusammensetzung nach einem der Ansprüche 1 bis 8, wobei eine Differenz ΔMw des Polystyrol-überführten gewichtsmittleren Molekulargewichts (Mw) zwischen dem Polycarbonatharz (A) und dem Polycarbonatharz (B) von 0 bis 80 000 ist.

11. Optisches Material, das durch eine Polycarbonatharz-Zusammensetzung nach einem der Ansprüche 1 bis 10 gebildet ist.

12. Linse, die durch eine Polycarbonatharz-Zusammensetzung nach einem der Ansprüche 1 bis 10 gebildet ist.

## Revendications

1. Composition de résine polycarbonate comprenant une résine polycarbonate (A) préparée en formant des liaisons carbonate dans un composé dihydroxy représenté par la formule (1) avec un diester de carbonate, et une résine polycarbonate (B) préparée en formant des liaisons carbonate dans du 2,2-bis (4-hydroxyphényle)propane avec un diester de carbonate ou du phosgène,
dans laquelle la résine polycarbonate (A) contient seulement les unités dérivées du composé hydroxy représenté par la formule (1) et un diester de carbonate. 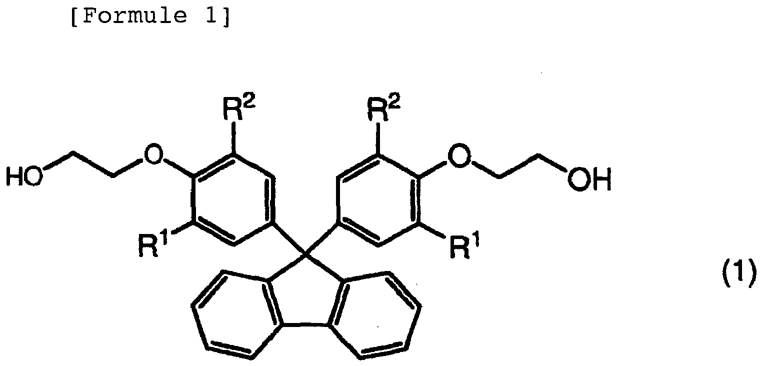 (dans la formule, R¹ et R² représentent chacun indépendamment un atome d'hydrogène ou un groupe méthyle).

2. Composition de résine polycarbonate selon la revendication 1, dans laquelle R¹ et R² sont des atomes d'hydrogène.

3. Composition de résine polycarbonate selon la revendication 1 ou 2, dans laquelle un rapport en poids de la résine polycarbonate (A) et du polycarbonate (B), (100 x (A))/((A) + (B)) est de 10 à 90 %.

4. Composition de résine polycarbonate selon la revendication 1 ou 2, dans laquelle un rapport en poids de la résine polycarbonate (A) et du polycarbonate (B), (100 x (A))/((A) + (B)) est de 20 à 80 %.

5. Composition de résine polycarbonate selon la revendication 1 ou 2, dans laquelle un rapport en poids de la résine polycarbonate (A) et du polycarbonate (B), (100 x (A))/((A) + (B)) est de 50 à 80 %.

6. Composition de résine polycarbonate selon l'une quelconque des revendications 1 à 5, dans laquelle le diester de carbonate est du carbonate de diphényle, du carbonate de ditolyle, du bis(chlorophényle)carbonate, du carbonate de m-crésyle, du carbonate de diméthyle, du carbonate de diéthyle, du carbonate de dibutyle ou du carbonate de dicyclohexyle.

7. Composition de résine polycarbonate selon l'une quelconque des revendications 1 à 5, dans laquelle le diester de carbonate est du carbonate de diphényle.

8. Composition de résine polycarbonate selon l'une quelconque des revendications 1 à 7, dans laquelle une masse moléculaire moyenne (Mw) en poids converti en polystyrène de la résine polycarbonate (A) est de 20 000 à 300 000 et une masse moléculaire moyenne (Mw) en poids converti en polystyrène de la résine polycarbonate (B) est de 15 000 à 250 000.

9. Composition de résine polycarbonate selon l'une quelconque des revendications 1 à 8, dans laquelle une différence, ΔMw, de la masse moléculaire moyenne (Mw) en poids converti en polystyrène entre la résine polycarbonate (A) et la résine polycarbonate (B) est de 0 à 120 000.

10. Composition de résine polycarbonate selon l'une quelconque des revendications 1 à 8, dans laquelle une différence, ΔMw, de la masse moléculaire moyenne (Mw) en poids converti en polystyrène entre la résine polycarbonate (A) et la résine polycarbonate (B) est de 0 à 80 000.

11. Matériau optique formé d'une composition de résine polycarbonate selon l'une quelconque des revendications 1 à 10.

12. Lentille formée d'une composition de résine polycarbonate selon l'une quelconque des revendications 1 à 10.
